(19) Europäisches Patentamt
European Patent Office
Office européen des brevets

(11) Numéro de publication : **0 599 692 A1**

(12) # DEMANDE DE BREVET EUROPEEN

(21) Numéro de dépôt : **93402773.1**

(51) Int. Cl.$^5$ : **A01N 43/36**

(22) Date de dépôt : **16.11.93**

(30) Priorité : **24.11.92 FR 9214068**

(43) Date de publication de la demande : **01.06.94 Bulletin 94/22**

(84) Etats contractants désignés : **BE CH DE ES FR GB LI LU NL**

(71) Demandeur : **Salkin, André
63, Rue de Neuvillette
F-76240 Le Mesnil-Esnard (FR)**

(72) Inventeur : **Salkin, André
63, Rue de Neuvillette
F-76240 Le Mesnil-Esnard (FR)**

(74) Mandataire : **Portal, Gérard et al
Cabinet Beau de Loménie
158, rue de l'Université
F-75340 Paris Cédex 07 (FR)**

(54) **Utilisation d'un dérivé de pyrrolidone pour potentialiser l'activité bactéricide d'un agent bactéricide et composition en comportant application.**

(57) L'invention concerne l'utilisation d'un dérivé de pyrrolidone pour potentialiser l'activité bactéricide d'un agent bactéricide.

Le dérivé de pyrrolidone peut être la 2-pyrrolidone ou une polyvinylpyrrolidone et être utilisé en une quantité comprise entre 0,001 % et 5 % en poids par rapport au poids total de la composition bactéricide sous sa forme finale d'utilisation bactéricide.

L'effet de potentialisation du dérivé de pyrrolidone est particulièrement inattendu.

EP 0 599 692 A1

Jouve, 18, rue Saint-Denis, 75001 PARIS

La présente invention concerne essentiellement l'utilisation d'un dérivé de pyrrolidone pour potentialiser l'activité bactéricide d'un agent bactéricide. L'invention couvre également des compositions bactéricides en comportant application.

La présente invention a pour but de résoudre le nouveau problème technique consistant en la fourniture d'une solution permettant de potentialiser l'activité bactéricide d'un agent bactéricide.

La présente invention a encore pour but de résoudre le nouveau problème technique consistant en la fourniture d'une solution permettant de potentialiser l'activité bactéricide d'un agent bactéricide comprenant une amine, en particulier une monoamine ou une polyamine qu'elle soit primaire, secondaire, tertiaire ou même quaternaire, qu'elle soit non substituée ou même substituée en particulier sur au moins un atome d'azote d'au moins une fonction amine.

La présente invention a encore pour but de résoudre le nouveau problème technique consistant en la fourniture d'une solution permettant de potentialiser l'activité d'un agent bactéricide comprenant un aldéhyde, en particulier le glutaraldéhyde.

La présente invention a également pour but de résoudre ces nouveaux problèmes techniques d'une manière particulièrement simple, fiable, peu coûteuse et utilisable à l'échelle industrielle et médicale.

Ainsi, selon un premier aspect, la présente invention concerne l'utilisation d'un dérivé de pyrrolidone pour potentialiser l'activité bactéricide d'un agent bactéricide.

Selon une variante de réalisation particulière, on entend par "dérivé de pyrrolidone" en particulier la pyrrolidone elle-même c'est-à-dire la 2-pyrrolidone ou 2-pyrrolidinone ou une polyvinylpyrrolidone, substances qui sont bien connues à l'homme de l'art.

Selon un mode de réalisation avantageux, le dérivé de pyrrolidone est utilisé à une quantité comprise entre 0,001% et 5% en poids par rapport au poids total de la composition bactéricide sous sa forme finale d'utilisation bactéricide.

Des quantités préférées de dérivés de pyrrolidone sont comprises entre 0,01% et 4% en poids par rapport au poids total de la composition finale. Encore de préférence, on peut utiliser de 0,1% à 2% en poids de la composition finale.

Selon une autre caractéristique avantageuse de l'invention, l'agent bactéricide précité peut être choisi parmi le groupe consistant de:

**A-** une mono ou une polyamine de type primaire, secondaire, tertiaire ou même quaternaire non substituée ou substituée sur au moins un atome d'azote de la fonction amine.

Selon une caractéristique avantageuse de l'invention, l'amine peut être choisie parmi l'une ou l'autre des formules chimiques développées suivantes:

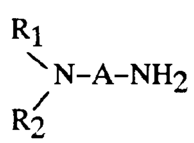

(I)

ou

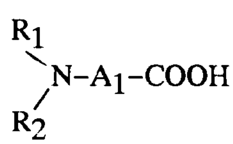

(II)

dans lesquelles :

- $R_1$ est un groupe alkyle linéaire ou ramifié, saturé ou insaturé, comprenant de 8 à 22 atomes de carbone ;
- $R_2$ est un hydrogène, un groupe alkyle ou hydroxyalkyle comprenant 1 à 4 atomes de carbone ou bien $-A-NH_2$ ;
- A est un groupe alkylène linéaire ou ramifié comprenant de 1 à 8 atomes de carbone ;
- $A_1$ est un groupe alkylène linéaire ou ramifié comprenant de 2 à 4 atomes de carbone.

Selon une autre caractéristique avantageuse de l'invention, l'amine précitée est une alkylèneamine pouvant avoir de 1 à 20 atomes de carbone ou mieux de 1 à 18 atomes de carbone. Un exemple particulièrement préféré actuellement d'alkylèneamine présente la formule $C_{18}H_{41}N$.

Par ailleurs un autre groupe d'amine avantageux selon l'invention comprend le groupe des produits d'addition d'acide(s) gras et d'alkylèneamine, tels que la lauryldiéthylèneamine ou la laurylpropylèneamine, primaire, secondaire ou tertiaire, ou encore sous forme diamine ou triamine.

Une concentration préférée en amine utilisée dans le cadre de l'invention est comprise entre 0,001 et 100 %, en particulier entre 0,001 et 10 % en poids par rapport au poids de la composition finale.

**B-** Un aldéhyde, en particulier le glutaraldéhyde.

La concentration préférée en aldéhyde est comprise entre 0,001 et 50 %, en particulier entre 0,001 et 10 % en poids par rapport au poids de la composition finale.

Selon une autre variante de réalisation avantageuse, l'agent bactéricide précité, potentialisé par le dérivé de pyrrolidone, ne comprend pas d'iode ou de dérivé iodé.

Selon un deuxième aspect, la présente invention couvre aussi une composition bactéricide comprenant un agent bactéricide, caractérisée en ce qu'elle comprend une quantité efficace de dérivé de pyrrolidone pour potentialiser l'activité bactéricide de l'agent bactéricide.

L'agent bactéricide comme le dérivé de pyrrolidone peuvent être définis comme précédemment.

Dans l'un ou l'autre des aspects précédents de l'invention, il est à noter que le terme "polyvinylpyrrolidone" regroupe toute polyvinylpyrrolidone et en particulier les polyvinylpyrrolidones ayant un poids moléculaire de 10 000 à 2,8 millions. De telles polyvinylpyrrolidones sont disponibles dans le commerce notamment chez GAF®, société américaine, sous la dénomination commerciale PVP K 15 ; K 30 ; K 90 et K 120.

Grâce à l'invention, on obtient un effet inattendu de potentialisation de l'activité bactéricide d'un agent bactéricide, en particulier tel que précédemment défini.

D'autres buts, caractéristiques et avantages de l'invention apparaîtront clairement à la lumière de la description explicative qui va suivre faite en référence à plusieurs exemples de réalisation actuellement préférés de l'invention donnés simplement à titre d'illustration et qui ne sauraient donc en aucune façon limiter la portée de l'invention. Dans les exemples, les pourcentages sont donnés en poids sauf indication contraire.

**Exemple 1 de l'invention**

**Composition avec alkylèneamine comme agent bactéricide**

On prépare diverses compositions d'agent bactéricide comprenant :

- alkylèneamine de formule $C_{18}H_{41}N$ provenance LONZA FRANCE 92-Nanterre.... 0,05 % ; 0,1 ; 0,25 ; 0,4
- polyvinylpyrrolidone de chez GAF® référence PVP K 90...... 0,01%
- eau q.s.p.... 100%

Ces solutions sont préparées tout simplement en mélangeant dans de l'eau de préférence distillée stérile l'agent bactéricide alkylèneamine et la polyvinylpyrrolidone potentialisante, sous agitation avec un léger chauffage pour favoriser la dissolution de la totalité de la polyvinylpyrrolidone, comme cela est bien connu à l'homme de l'art.

**Exemple 2 comparatif**

On prépare des compositions comparatives de formule suivante:

- agent alkylèneamine de l'exemple 1 .... 0,05 % ; 0,1; 0,25 ; 0,4
- eau q.s.p.... 100 %

**Exemple 3**

**Détermination de l'activité potentialisante de la polyvinylpyrrolidone de l'agent bactéricide**

Les compositions selon l'exemple 1 et 2 précités sont testées relativement à leur activité bactéricide selon le test d'activité bactéricide de la norme française NF T72171 en condition d'eau dure et de saletés, soit en présence de 60°F de calcium et 0,3% de protéines. Les compositions 1 et 2 précitées sont aussi testées sur l'antigène et l'ADN viral de l'hépatite B.

Les résultats obtenus sont répertoriés dans le tableau 1 suivant, vis-à-vis de la bactérie mycobacterium smegmatis.

## Tableau 1

| | | | | | | | | |
|---|---|---|---|---|---|---|---|---|
| | Alkylèneamine Concentration | | | | | | | |
| Exemples 1 - 2 | 0,05 | | 0,1 | | 0,25 | | 0,4 | |
| Mycobacterium smegmatis CIP 7326 concentrations actives ex. 1 | + | | + | | 0 | | 0 | |
| Mycobacterium smegmatis CIP 7326 concentrations actives ex. 2 | + | | + | | + | | 0 | |
| La préparation selon l'exemple 1 est active à partir de 0,25 %<br>La préparation selon l'exemple 2 est active à partir de 0,40 %<br>en présence d'eau dure et de protéine | | | | | | | | |
| Exemples 1 et 2 concentrations testées sur l'antigène et l'ADN | 0,05 | | 0,1 | | 0,25 | | 0,4 | |
| | A | B | A | B | A | B | A | B |
| Préparation selon l'exemple 1 | 100 | + | 100 | 28 | 100 | 35 | 100 | 68 |
| Préparation selon l'exemple 2 | 100 | + | 100 | 21 | 100 | 29 | 100 | 38 |

A. % atténuation antigène

B. % atténuation ADN

\+ non actif

### Exemple 4 de l'invention

**Composition avec aldéhyde comme agent bactéricide**

On prépare diverses compositions de la formule suivante :
- glutaraldéhyde .... 0,16 % ; 0,20 %
- polyvinylpyrrolidone de chez GAF® référence PVP K30.... 0,5 %
- eau q.s.p... 100 %

Ces compositions sont préparées de manière similaire à l'exemple 1.

### Exemple 5 comparatif

On prépare diverses compositions comparatives de formule suivante :
- glutaraldéhyde... 0,16 % et 0,20 %
- eau q.s.p.... 100%

### Exemple 6

**Détermination de l'activité bactéricide de glutaraldéhyde potentialisée**

On réalise le test d'activité bactéricide comme décrit à l'exemple 3 avec les compositions des exemples 4 et 5, on obtient des résultats d'activité bactéricide qui sont répertoriés au tableau 2 ci-après, selon la même norme que celle décrite à l'exemple 3.

**Tableau 2**

| | Concentration en glutaraldéhyde | |
|---|---|---|
| | 0,16 % | 0,20 % |
| Mycobacterium smegmatis CIP 7326 Example 4 | 0 | 0 |
| Mycobacterium smegmatis CIP 7326 Example 5 | + | 0 |
| La préparation selon l'example 4 est active à 0,16 % | | |
| La préparation selon l'example 5 est active à partir de 0,20 % | | |

En conclusion, le dérivé de pyrrolidone potentialise de manière significative l'activité bactéricide de l'agent bactéricide.

**Revendications**

1. Utilisation d'un dérivé de pyrrolidone pour potentialiser l'activité bactéricide d'un agent bactéricide.

2. Utilisation selon la revendication 1, caractérisée en ce que le dérivé de pyrrolidone est choisi parmi la 2-pyrrolidone ou une polyvinylpyrrolidone.

3. Utilisation selon la revendication 1 ou 2, caractérisée en ce que le dérivé de pyrrolidone est utilisé en une quantité comprise entre 0,001 % et 5 % en poids par rapport au poids total de la composition bactéricide sous sa forme finale d'utilisation bactéricide.

4. Utilisation selon l'une des revendications 1 à 3, caractérisée en ce que le dérivé de pyrrolidone précité est utilisé à une concentration comprise entre 0,01 % et 4 % en poids, mieux entre 0,1 et 2 % en poids, par rapport au poids total de la composition finale.

5. Utilisation selon l'une des revendications 1 à 4, caractérisée en ce que l'agent bactéricide précité est choisi parmi le groupe consistant en:
   **A-** une mono- ou une polyamine de type primaire, secondaire, tertiaire ou même quaternaire non substituée ou substituée sur au moins un atome d'azote de la fonction amine;
   **B-** un aldéhyde, en particulier le glutaraldéhyde.

6. Utilisation selon la revendication 5, caractérisée en ce que l'amine précitée est choisie parmi l'une ou l'autre des formules chimiques développées suivantes :

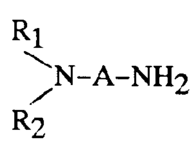
(I)

ou

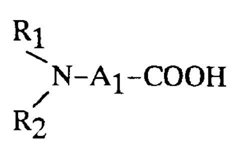
(II)

dans lesquelles:
- $R_1$ est un groupe alkyle linéaire ou ramifié, saturé ou insaturé, comprenant de 8 à 22 atomes de carbone ;
- $R_2$ est un hydrogène, un groupe alkyle ou hydroxyalkyle comprenant 1 à 4 atomes de carbone ou

bien $-A-NH_2$ ;
- A est un groupe alkylène linéaire ou ramifié comprenant de 1 à 8 atomes de carbone ;
- $A_1$ est un groupe alkylène linéaire ou ramifié comprenant de 2 à 4 atomes de carbone.

**7.** Utilisation selon la revendication 5 ou 6, caractérisée en ce que l'amine précitée est une alkylèneamine pouvant avoir de 1 à 20 atomes de carbone ou mieux de 1 à 18 atomes de carbone, et encore de préférence une alkylèneamine de formule:

$$C_{18}H_{41}N$$

**8.** Utilisation selon la revendication 5, caractérisée en ce que l'amine précitée est un produit d'addition d'acide gras et d'alkylèneamine, telle que la lauryldiéthylèneamine, la laurylpropylèneamine, primaire, secondaire ou tertiaire, ou encore sous forme diamine ou triamine.

**9.** Utilisation selon l'une des revendications 5 à 8, caractérisée en ce que l'amine précitée est présente dans une concentration comprise entre 0,001 et 100 %, en particulier entre 0,001 et 10 % en poids par rapport au poids de la composition finale.

**10.** Utilisation selon l'une des revendications 5 à 9, caractérisée en ce que l'aldéhyde précité est présent dans une concentration comprise entre 0,001 et 50 %, en particulier entre 0,001 et 10 % en poids par rapport au poids de la composition finale.

**11.** Utilisation selon l'une des revendications précédentes, caractérisée en ce que l'agent bactéricide précité, potentialisé par le dérivé de pyrrolidone, ne comprend pas d'iode ou de dérivé iodé.

**12.** Composition bactéricide comprenant un agent bactéricide, caractérisée en ce qu'elle comprend une quantité efficace de dérivé de pyrrolidone pour potentialiser l'activité bactéricide de l'agent bactéricide.

**13.** Composition selon la revendication 12, caractérisée en ce que le dérivé de pyrrolidone ou l'agent bactéricide est tel que défini à l'une quelconque des revendications 2 à 11.

Office européen des brevets

# RAPPORT DE RECHERCHE EUROPEENNE

Numero de la demande
EP 93 40 2773

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | FR-A-2 342 074 (N. SALKIN)<br>* revendications *<br>* page 1, ligne 30 - ligne 34 *<br>* exemples *<br>--- | 1-13 | A01N43/36 |
| X | EP-A-0 212 866 (MINNESOTA MINING AND MANUFACTURING CO.)<br>* exemples *<br>--- | 12,13 | |
| X | EP-A-0 361 033 (BAYER)<br>* exemples *<br>--- | 12,13 | |
| X | EP-A-0 252 310 (MERZ)<br>* page 4; tableau 1 *<br>--- | 12,13 | |
| X | FR-A-2 349 336 (A.N. FELLOWS)<br>* page 9; exemple 1 *<br>----- | 12,13 | |

DOMAINES TECHNIQUES RECHERCHES (Int.Cl.5)

A01N

Le présent rapport a été établi pour toutes les revendications

| Lieu de la recherche | Date d'achèvement de la recherche | Examinateur |
|---|---|---|
| LA HAYE | 28 Février 1994 | Decorte, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)